# EUROPEAN PATENT APPLICATION

(11) **EP 4 588 838 A1**
(43) Date of publication of application: **23.07.2025**
(21) Application number: 24153043.5
(22) Date of filing: 22.01.2024
(51) Int. Cl.: B65G 1/04

(54) **AN AUTOMATED STORAGE AND RETRIEVAL SYSTEM**

(71) Applicant: AUTOSTORE TECHNOLOGY AS, 5578 Nedre Vats (NO)
(72) Inventor: Eide, Jonathan, 5578 Nedre Vats (NO)
(74) Representative: Kilburn & Strode LLP

(57) **Abstract**

An automated storage and retrieval system comprising: at least one container handling vehicle (301); a plurality of storage containers (6) stackable one on top of another to form self-supporting stacks (10), which stacks (10) are arrangeable next to each other in rows in a first horizontal direction X and in a second horizontal direction Y perpendicular to the first horizontal direction X, each container (6) having an upper rectangular opening defined by an upper rim comprising four rim sections. A rail system comprising straight rail sections formed by the rim sections of the containers (6) forming the topmost layer of containers (6) of the stacks (10) when arranged next to each other. The at least one container handling vehicle (301) being configured to be operated on the rail system to raise, by means of a lifting device of the vehicle, storage containers from, and to lower storage containers (6) onto, the stacks (10), and to transport the storage containers (6) above the stacks (10). The rail system (108) comprises a first set of parallel rails (4) arranged to guide movement of the at least one container handling vehicle (301) in a first horizontal direction X, and a second set of parallel rails arranged perpendicularly to the first set of rails (4) to guide movement of the at least one container handling vehicle (301) in a second horizontal direction Y which is perpendicular to the first direction X, wherein the at least one container handling vehicle (301) is arranged to move above the stacks (10) in both directions.

## Description

### TECHNICAL FIELD

The present invention relates to an automated storage and retrieval system for storage and retrieval of containers, a container for such a system, a handling vehicle for an automated storage and retrieval system as well as a method for storing and retrieving items in containers of an automated storage and retrieval system.

### BACKGROUND

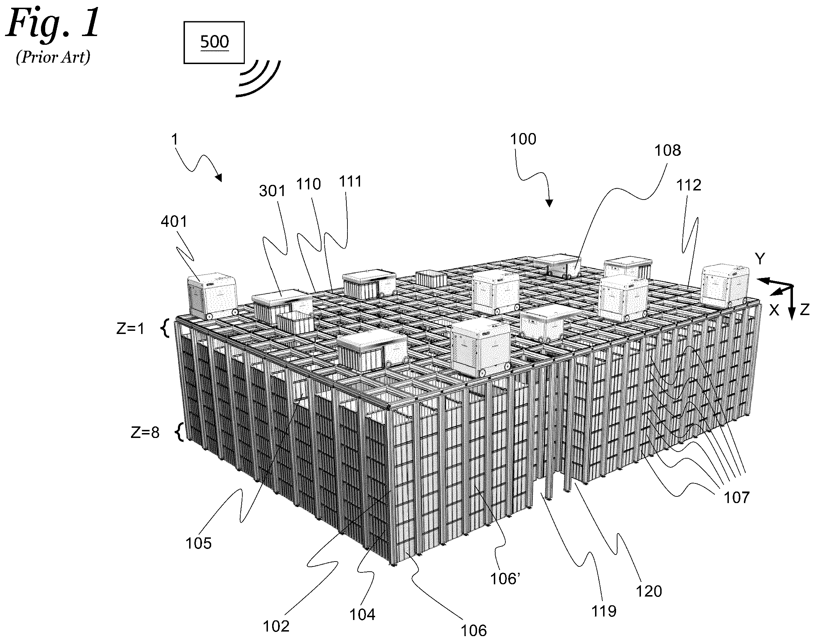

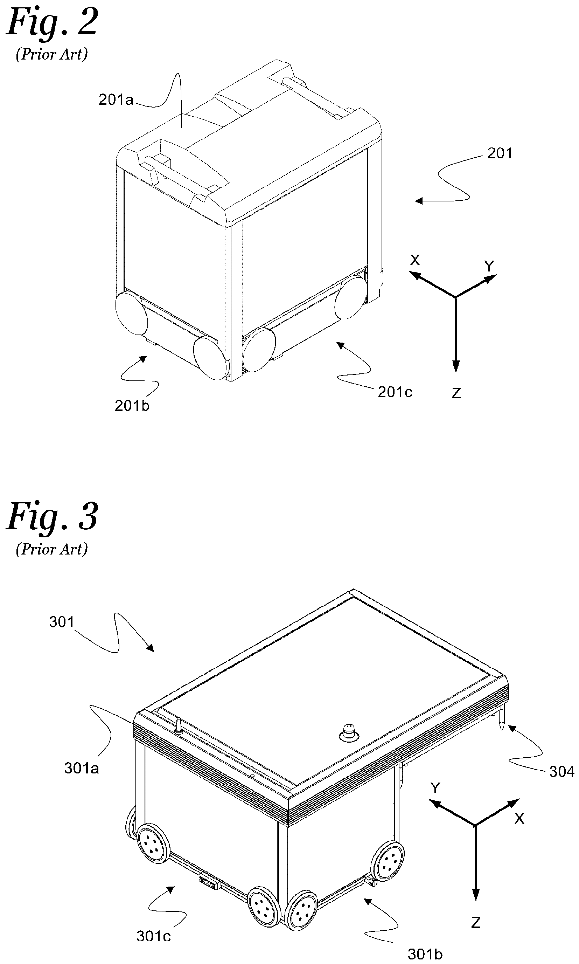

Fig. 1 discloses a prior art automated storage and retrieval system 1 with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as containers, are stacked one on top of one another to form stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction X across the top of the frame structure 100, and a second set of parallel rails 111 arranged perpendicular to the first set of rails 110 to guide movement of the container handling vehicles 201,301,401 in a second direction Y which is perpendicular to the first direction X. Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically self-supporting.

Each prior art container handling vehicle 201,301,401 comprises a vehicle body 201a,301a,401a and first and second sets of wheels 201b, 201c, 301b, 301c,401b,401c which enable the lateral movement of the container handling vehicles 201,301,401 in the X direction and in the Y direction, respectively. In Figs. 2, 3 and 4 two wheels in each set are fully visible. The first set of wheels 201b,301b,401b is arranged to engage with two adjacent rails of the first set 110 of rails, and the second set of wheels 201c,301c,401c is arranged to engage with two adjacent rails of the second set 111 of rails. At least one of the sets of wheels 201b, 201c, 301b,301c,401b,401c can be lifted and lowered, so that the first set of wheels 201b,301b,401b and/or the second set of wheels 201c,301c,401c can be engaged with the respective set of rails 110, 111 at any one time.

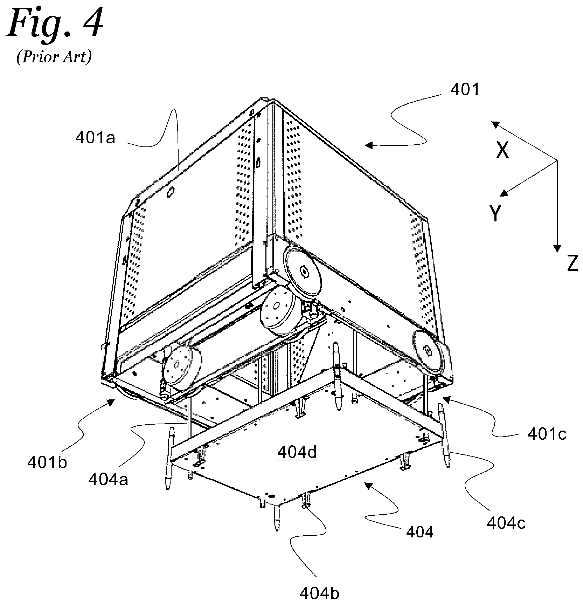

Each prior art container handling vehicle 201,301,401 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301,401 so that the position of the gripping / engaging devices with respect to the vehicle 201,301,401 can be adjusted in a third direction Z which is orthogonal the first direction *X* and the second direction *Y.* Parts of the gripping device of the container handling vehicles 301,401 are shown in Figs. 3 and 4 indicated with reference number 304,404. The gripping device of the container handling device 201 is located within the vehicle body 201a in Fig. 2 and is thus not shown.

Conventionally, and also for the purpose of this application, *Z*=1 identifies the uppermost layer available for storage containers below the rails 110,111, i.e. the layer immediately below the rail system 108, *Z*=2 the second layer below the rail system 108, *Z*=3 the third layer etc. In the exemplary prior art disclosed in Fig. 1, Z=8 identifies the lowermost, bottom layer of storage containers. Similarly, *X*=1*...n* and *Y*=1*...n* identifies the position of each storage column 105 in the horizontal plane. Consequently, as an example, and using the Cartesian coordinate system *X*, *Y*, *Z* indicated in Fig. 1, the storage container identified as 106' in Fig. 1 can be said to occupy storage position *X*=17, *Y*=1, Z=6. The container handling vehicles 201,301,401 can be said to travel in layer Z=0, and each storage column 105 can be identified by its *X* and *Y* coordinates. Thus, the storage containers shown in Fig. 1 extending above the rail system 108 are also said to be arranged in layer Z=0.

The storage volume of the framework structure 100 has often been referred to as a grid 104, where the possible storage positions within this grid are referred to as storage cells. Each storage column may be identified by a position in an *X-* and *Y-*direction, while each storage cell may be identified by a container number in the X-, Y- and Z-direction.

Each prior art container handling vehicle 201,301,401 comprises a storage compartment or space for receiving and stowing a storage container 106 when transporting the storage container 106 across the rail system 108. The storage space may comprise a cavity arranged internally within vehicle body 201a,401a as shown in Figs. 2 and 4 and as described in e.g. WO2015/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicle 201 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term 'lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a Y direction) may comprise two tracks. Each rail 110,111 may also comprise two track members that are fastened together, each track member providing one of a pair of tracks provided by each rail.

WO2018/146304A1, the contents of which are incorporated herein by reference, illustrates a typical configuration of rail system 108 comprising rails and parallel tracks in both *X* and *Y* directions.

In the framework structure 100, a majority of the columns are storage columns 105, i.e. columns 105 where storage containers 106 are stored in stacks 107. In addition to storage columns 105, there are special-purpose columns within the framework structure. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105, or relocated to other storage columns 105.

For monitoring and controlling the automated storage and retrieval system 1, e.g. monitoring and controlling the location of respective storage containers 106 within the framework structure 100, the content of each storage container 106, and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

Several steps are required to mount the grid of drive tracks, for instance made of aluminium beams, which carry the robots of a system as described so far. The beams typically need to be prepared and cut to the required length to form the 3-dimensional carrying structure.
The structure typically requires the horizontal rectangular grid of tracks on the top level to form the rails for the robots to drive there upon. In addition, columns are typically needed to support each crossing of said grid. Connectors and screws are typically used to bolt the aluminium beams together to stably and reliably form the structure.
The present invention seeks to overcome or at least to a certain extent ameliorate the problems associated with the prior art

### SUMMARY

According to a first aspect, there is provided an automated storage and retrieval system comprising:
a. at least one container handling vehicle;
b. a plurality of storage containers stackable one on top of another to form self-supporting stacks, which stacks are arrangeable next to each other in rows in a first horizontal direction X and in a second horizontal direction Y perpendicular to the first horizontal direction X, each container having an upper rectangular opening defined by an upper rim comprising four rim sections;
c. a rail system comprising straight rail sections formed by the rim sections of the containers forming the topmost layer of container of the stacks when arranged next to each other;
d. the at least one container handling vehicle being configured to be operated on the rail system to raise, by means of a lifting device of the vehicle, storage containers from, and to lower storage containers onto, the stacks, and to transport the storage containers above the stacks, wherein the rail system comprises a first set of parallel rails arranged to guide movement of the at least one container handling vehicle in a first horizontal direction X, and a second set of parallel rails arranged perpendicularly to the first set of rails to guide movement of the at least one container handling vehicle in a second horizontal direction Y which is perpendicular to the first direction X, wherein the at least one container handling vehicle is arranged to move above the stacks in both directions.

In contrast to the state of art as described so far, no grid and rail framework structure is needed: neither separate horizonal rails nor vertical columns (nor any connecting of stiffening structures for these) are required at all.
Instead, the rectangular horizontal grid of rails in the two perpendicular directions (as the rails most preferred orientation) is formed by the container each having (respective segments of) rails integrated into the upper rim of the containers. Consequently, the robots can be configured to drive directly on the stacked containers, the rims of the uppermost containers of the stack forming the required horizontal grid of rails.

The containers are preferably stacked one on top of another to form self-supporting stacks, an amount of which stacks are of the same height, for example, with the same amount of containers.

Optionally, the containers comprise form fitting side elements configured to hold containers next to each other in the X- and Y-direction, while allowing vertical relative motion when the stacks are neighboured next to each other in rows in a first horizontal direction X and/or in a second horizontal direction Y perpendicular to the first horizontal direction X.

The containers can comprise elements arranged to connect (preferably in a form-fitting manner) neighbouring containers, such that they are fastened towards each other against horizontal motion away from each other, while the connecting elements allow for vertical motion between neighbouring containers - to facilitate stacking next to each.

Optionally, the rail sections of the containers neighbouring each other are aligned in the X-direction and in the Y-direction with each other when the stacks are arranged next to each other in the rows, and such that the rail sections of the neighbouring containers of the topmost layer form continuous rails to the extent the stacks are of the same height and arranged next to each other in the respective direction.

Optionally, pairs of parallel rails are formed by rail sections of adjacent containers.

Optionally, the at least one container handling vehicle is configured to raise containers by at least the height of a container above the rail or ground on which the vehicle is positioned.

The system optionally comprising at least one vehicle handling vehicle configured to be operated, on the rail system and/or on a horizontal ground, to raise, by means of a lifting device of the vehicle, vehicles by at least the height of a container and to lower such vehicles onto the rail system and to transport such vehicles on the rail system and/or on a horizontal ground.

Optionally, the at least one vehicle handling vehicle is also configured as a container handling vehicle.

According to a second aspect there is provided a storage container for an automated storage and retrieval system according to the first aspect or any optional feature thereof, wherein the storage container comprises an upper rectangular opening defined by an upper rim comprising four rim sections each forming straight rail sections.

Optionally, the storage container comprises form fitting side elements configured to hold containers next to each other in the X- and Y-direction while allowing vertical relative motion between adjacent containers.

The storage containers are preferably cuboid or box shaped having a storage volume with an upper opening. The opening has got an upper rim comprising four rim sections being rectangularly arranged and being oriented in an X- or a Y-direction rectangularly to each other when the stacks are arranged next to each other in rows in the X- and/or the Y-direction.

Optionally, the form fitting side elements are formed as dovetails or other correspondingly interconnecting and/or locking features.

Optionally, corresponding form fitting structures are provided in the upper rim sections and in the bottom of the container. These form fitting structures may be protrusions extending from the bottom of a container which fit in corresponding apertures which could include those formed by the rail system in the top of a container stacked directly thereunder. By means of these form fitting structures containers are configured to be stacked one of the containers on top of another to form self-supporting vertical stacks. Further they can be configured to be arranged, horizontally and as already mentioned, next to each other in straight rows and such that the rows are oriented in the X- and Y-direction rectangularly to each other to form a horizontal rectangular pattern or grid, of "columns and rows". So, this pattern can be seen as to consist of rectangular spaces for respective single of the containers.

According to a third aspect, there is provided a handling vehicle for an automated storage and retrieval system according to the first aspect or any optional feature thereof, configured to be operated, on a rail system and/or on a horizontal ground, to raise, by means of a lifting device of the vehicle, vehicles by at least the height of a container and to lower such vehicles onto the rail system and to transport such vehicles on the rail system and/or on a horizontal ground.

According to a fourth aspect, there is provided a method for storing and retrieving items in containers of an automated storage and retrieval system as described in relation to the first aspect or any optional feature thereof, the method comprising forming a grid of said containers to form said rail system comprising straight rail sections formed by the rim sections of the containers forming the topmost layer of containers of the stacks when arranged next to each other.

Optionally, the method comprises:
a. a) raising the topmost container of a first stack and transporting it to an end of a row of stacks and lowering it there next to the row by means of a container handling vehicle,
b. b) repeating step a), until, in the first stack, a container is raised which needs to be handled at an access station,
c. c) transporting said container to the access station.

The method may allow for transportation of a target container to an access station independent of its location within the arrangement of containers (so even if located in the middle of the lowermost layer) and still providing for a complete uppermost layer of containers, without any gap (which otherwise might inhibit or at least complicate the driving ways of the vehicles on the uppermost layer).

The container which needs to be handled may be termed a target container for instance, because it comprises an item to be retrieved - this may also be the container which was raised firstly, so that this step of repeating is not required.

Optionally, the method further comprises:
d) raising the respective topmost of the containers lowered next to the row, or of another stack at an end of an end row, and transporting it to the first stack and lowering it there, and
a. e) repeating step d), until the first stack is filled up to the height of the neighbouring stacks.

Removal of a container for emptying and loading is to be controlled intelligently - and a removed container possibly substituted by another container located in the stack at a position where this substituting container is not required for the completeness and/or the stability of the grid in particular, or of the stack (supporting and forming the grid) in general.

The system of the invention, can be mounted or assembled by placing containers next to each other in the X- and Y-direction (to form a first lowermost layer of containers) and on top of each other in a second layer (and furthermore additional layers). Placing a vehicle or robot of the invention onto the uppermost layer of this arrangement of containers (arranged in whatever amount of layers above each other), allows for using the at least one robot then up there to automatically handle the containers, in principle alike in a system of the state of art as described above.

For the at least one robot to be lifted from the ground floor onto this grid of rails (formed by the rims of at least one layer of containers), an elevator is an optional preferred element of the system. An elevator may be a vehicle with wheels for running on the rail system and with means such as a fork lift type arrangement to lift or elevate a container handling vehicle or robot. In a preferred embodiment, it suffices that the elevator is configured to lift up a robot by the height of only one container: the robot up there then can lift up containers to form a next level of containers next to itself, as a robot 301, 401 of the state of art can lift containers high enough for this. Consequently, such robots are optional preferred elements of the system.

If such an elevator is configured to be lifted (preferably by another one of the elevators or by a robot) up by the height of one container, too, onto the grid formed by the upper edges of a first layer of containers, and, positioned there, if this elevator then is configured to lift a robot onto the next level of containers (which a robot had already formed on this level on which this robot was busily driving), one layer of containers after another can be formed on top of each other to let this arrangement of container layers grow in height.

As a further advantage, the system is locally flexible, as the containers do not need anything but a horizontally levelled floor. Further consequently, the location of the arrangement of containers may be moved without any preparational steps - and may even be moved by its own means: namely by means of the transport functionality of the robot(s) driving on the stack. By moving containers from one edge of a once erected arrangement to the opposite edge, the robot(s) may move the whole stack, on the horizontal ground, sideways into the direction of the latter edge.

Further such a system may comprise at least one container handling vehicle configured to drive on rails and configured, by means of a gripping device to grip a container from a predefined space below the vehicle, when driving above such containers. Further such a container handling vehicle is configured, by means of the lifting device, to raise a gripped container - in particular, to raise it from a respective one of the rectangular spaces and thus possibly from another container already stored in that hexagonal space. Further such a container handling vehicle is configured, by means of the lifting device of the vehicle, to lower containers - in particular, to lower them into a respective one of the rectangular spaces of the pattern, and thus possibly to stack the respective container onto another container already stored in that space of the pattern. And yet further, such a container handling vehicle is configured, by driving on rails into the X- or Y-direction (on their two sets of wheels) and by being accordingly dimensioned at least mechanically and geometrically, to transport a gripped container horizontally.

Further such a system comprises such rails, for guiding the at least one container handling vehicle between a respective predefined location above the rectangular spaces of the pattern. At these locations in particular, the vehicle is configured to grip and lift from - and to lower and to drop a container into such a space of the pattern.

Straight rail sections may be formed along the above mentioned rim sections of the containers and the rail system may be formed by the rail sections along the rim sections of those containers forming the topmost layer of containers of the stacks when arranged next to each other.

It is possible during use of the system or the method to lift a container somewhere in the middle of the uppermost layer of the containers (and to remove it to some other space of the pattern, for instance to retrieve some item stored in this removed container or in some other container of the stack further below in this space of the pattern) - so that the uppermost layer of container misses one or more containers somewhere in the middle - so to speak resulting in possibly being "incomplete".

The vehicle of may be of the initially described cantilever construction, it is still possible in this "incomplete" state of the system for such vehicle to drive on one of the containers neighbouring this "gap" in the uppermost layer - and to reach into this gap with its lifting means to raise the next topmost container of that stack further below in that gap (for instance, to retrieve some item stored in this next topmost container or in some other container of that stack further below in this space of the pattern).

It is optionally preferred for the method, to fill this gap by lowering the according amount of containers into this gap to top it up until the topmost container is level with the uppermost layer - thus completing this level again at this space: to fill this gap before raising a neighbouring container of this gap (and to remove it to some other space of the pattern, for instance to retrieve now some item stored in this container or in some other container of the stack further below in this space of the pattern). This preferred step of filling this gap before raising a neighbouring container is preferred for the following reason: it helps to avoid that there is a gap in the uppermost layer (and thus no rails to carry a vehicle) next to another gap into which a vehicle is meant to reach with its lifting means for to raise the next topmost container of that stack further below in that gap (for instance, to retrieve some item stored in this next topmost container or in some other container of that stack further below in this space of the pattern).

It is a further preference that the containers comprise form fitting side elements and that, by means of these elements, the containers are configured to be held immobile next to each other (or relative to each other) in the horizontal X- and Y-direction, while allowing vertical relative motion rectangularly to the X- and Y-direction (when the containers are neighboured next to each other in the rows in one of the horizontal directions X or Y - in any of the levels of the containers when stacked and arranged in these stacks next to each other in the X- and Y-direction).This preferred embodiment provides for an arrangement of the containers in stacks which is thus stabilized against falling sideways, in particular when a vehicle drives on top of the arrangement and thus causes dynamic forces which may be directed laterally.

It is yet a further preference that the rail sections of the containers are configured as follows: When containers are arranged next to each other to form the rectangular pattern in one mutual layer (and in particular in the uppermost layer of such arrangement of the containers), then the rail sections oriented in the X-direction of containers neighbouring each other in the X-direction are aligned with each other, and then the rail sections oriented in the Y-direction of containers neighbouring each other in the Y-direction are aligned with each other, and then, in a respective mutual layer, the rail sections of the neighbouring containers form continuous rails. The latter is in particular so in the topmost layer of the arrangement of containers - in particular to the extent the container stacks are of the same height and arranged next to each other in the respective direction. Consequently, as each container comprises rails in its four rectangular rims of its opening, two parallel rails are formed directly next to each other where the rim sections of neighbouring containers consequently are neighboured directly. Further consequently, vehicles like those initially described can pass each other on neighbouring rows of containers.

To build an arrangement of (possibly more than one) stacked layers of containers in particular from scratch on a plane ground - and therefor moving a container up to form a respective next uppermost layer, at least one of the container handling vehicles can be configured to raise containers by at least the height of a container above the rail or ground on which the vehicle is positioned (to form a next higher uppermost layer). This applies for instance to those vehicles initially described.

To build an arrangement of possibly more than one stacked layers of containers in particular from scratch on a plane ground - and therefore moving a vehicle up onto the respective uppermost layer, at least one vehicle handling vehicle can be configured to be operated, on the rail system and/or on a horizontal ground, to raise, by means of a lifting device of the vehicle, other vehicles by at least the height of a container and to lower such vehicles onto the rail system and to transport such vehicles on the rail system and/or on a horizontal ground (to raise a vehicle onto a (newly formed) next higher topmost layer). These other vehicles which the vehicle handling vehicle is configured to raise and to lower and to transport, may be container handling vehicles and/or other vehicle handlings. It may even be that at least one container handling vehicle is configured to be the at least one vehicle handling vehicle - in other words, that at least one container handling vehicle of the system is not only configured to raise and to lower and to transport containers, but also other vehicles, which again may be container handling vehicles and/or other vehicle handlings.

Any steps making use of the system as described herein and in particular being steps of the method, preferably are performed under computer numeric control of an accordingly programmed and/or programmable electronic data processing system, preferably comprising transducers to measure and/or sense electronically status parameters of the system including locations of the vehicles, contents of the individual containers and their respective locations.

### BRIEF DESCRIPTION OF THE DRAWINGS

The following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having an internally arranged cavity for carrying storage containers therein.
Fig. 3 is a perspective view of a prior art container handling vehicle having a cantilever for carrying storage containers underneath.
Fig. 4 is a perspective view, seen from below, of a prior art container handling vehicle having an internally arranged cavity for carrying storage containers therein.
Fig. 5 is a schematic side view of an automated storage and retrieval system according to the invention.
Fig. 6a is a schematic plan view of four containers of an automated storage and retrieval system according to an embodiment of the invention.
Fig. 6b is a schematic side view, partially cut away along "SECTION VI B" in Fig. 6a) of the four containers shown in Fig. 6a.
Fig. 7a is a schematic top view of the area where four corners of the four containers of Fig. 6a meet in the middle of their arrangement according to Fig. 6a (cut away along "SECTION A-B" in Fig. 7b).
Fig. 7b is a schematic side view of the area of the four containers shown in Fig. 7a (cut away along "SECTION VII B" in Fig. 7a).

### DETAILED DESCRIPTION

In the following, embodiments of the invention will be discussed in more detail with reference to the appended drawings. It should be understood, however, that the drawings are not intended to limit the invention to the subject-matter depicted in the drawings.

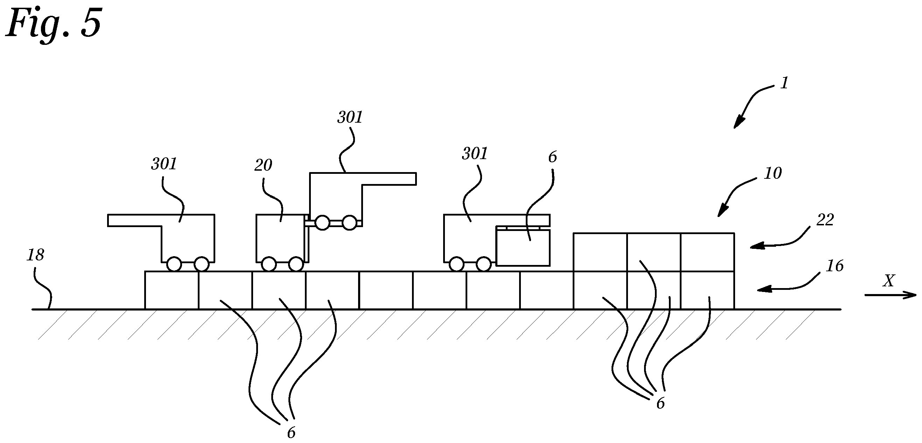

The automated storage and retrieval system 1 is assembled by placing containers 6 (Fig. 5) on the ground 18 next to each other in the X-direction and Y-direction to form a first lowermost layer of containers. Each container may be used to store items in the automated storage and retrieval system. Further containers 6 are mounted upon the first lowermost layer of containers to form a second layer as can be seen on the right of Fig. 5 where two layers of containers 6 have been assembled. Additional layers of containers 6 can of course be added to the stacks.

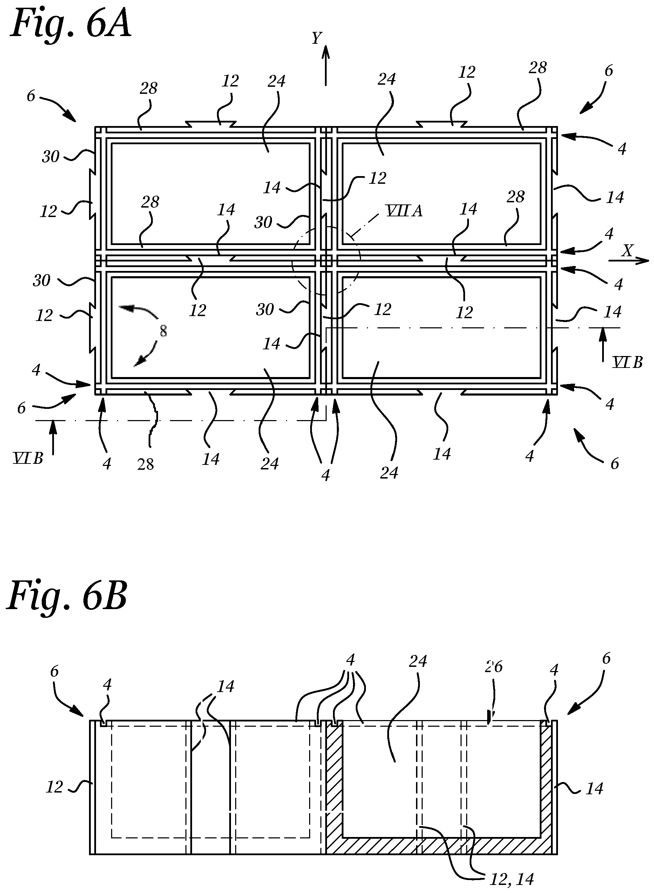

Figs. 6a to 7b show a rectangular horizontal grid of rails 4 which extend in two perpendicular directions X and Y formed by the assembly of containers 6. Each container 6 has respective segments of rails 4 integrated into its upper rim formed of rim sections 28, 30. Consequently, robots 301 (see Figs. 1 and 3 and the associated background description) are then able to drive directly on the stacked containers 6 (Fig. 5) with the rim sections 28, 30 of the uppermost containers 6 of respective stacks 10 (Fig. 5) forming the required horizontal grid of rails 4.

As shown in Figs. 6a to 7b, containers 6 comprise dovetail elements 12, 14 arranged to connect neighbouring containers in a form-fitting manner, such that they are fastened towards each other against horizontal motion away from each other, while at the same time the connecting elements 12, 14 allow for vertical motion between neighbouring containers so that containers 6 can be stacked and removed from the stacks 10.

Once containers 6 have been assembled and mounted together, a vehicle or robot 301 can be placed onto the uppermost layer of the arrangement of containers 6 shown in Fig. 5. The robot 301 can then run on tracks formed by containers 6 and can used to automatically handle the containers, in a similar manner to the system described in relation to Fig. 1.

In order to lift a robot 301 (Fig. 5) from the ground 18 onto the grid of rails 4 formed by the rims 8 formed by respective rim sections 28, 30 of containers of at least one layer 16 of containers 6, an elevator 20 may be employed in system 1. The elevator 20 can be used to lift up a robot 301 by the height of only one container 6. An additional robot 301 (not shown) on the next upper level 22 then can lift up containers to form an again even higher next level (not shown) of containers 6 on top of the second upper level 22 of Fig.5.

An elevator 20 itself can also be lifted for example by another one of the elevators 20 up by the height of one container, for example onto the grid formed by the upper edges of a first layer 16 of containers 6. The elevator 20 can then also lift a robot 301 (see elevator 20 in Fig. 5) onto the next level 22 of containers, which the robot 301 on the right in Fig. 5 may have already formed on this level. One layer of containers 6 after another can be formed on top of each other to let this arrangement of container layers grow in height.

As shown in Figs. 6a and 6b, the system 1 comprises box-shaped storage containers 6 having a storage volume 24 with an upper opening 26. The opening of each container 6 has got an upper rim 8 comprising four rim sections 28, 30 being rectangularly oriented towards each other and being oriented in an X- or a Y-direction rectangularly to each other when the containers 6 are arranged next to each other in rows in the X- and/or the Y-direction (Fig. 6).

Further the containers 6 may additionally comprise form fitting structures (not shown) - in the upper rim sections 28, 30 and in the bottom of the respective container - by means of which the containers are configured to be stacked on top of one another to form self-supporting vertical stacks 10.

The containers 6 are configured to be arranged horizontally adjacent to one another in aligned rows and such that the rows are oriented in the X- and Y-direction rectangularly to each other to form a horizontal rectangular pattern, of columns and rows of containers 6. This pattern can be seen as to consist of rectangular spaces for respective single of the containers.

Further such a system comprises container handling vehicles 301 arranged to drive on the rails 4 and configured, by means of a gripping device 404, 404b (being installed with the vehicles 301, too) to grip a container 6 from a predefined space below the vehicle 301, when driving above such containers (Fig. 5). Further such a container handling vehicle 301 is configured, by means of the lifting device 401c (being installed with the vehicles 301, too), to raise a gripped container - in particular, to raise it from a respective one of the rectangular spaces. Such a container handling vehicle 301 is also configured, by means of the lifting device 401c of the vehicle, to lower containers - in particular, to also lower them into a respective one of the rectangular spaces of the pattern, and thus possibly to stack the respective container onto another container already stored in that space of the pattern. And yet further, such a container handling vehicle 301 is configured, by driving on rails into the X- or Y-direction (on their two sets of wheels 301b and c) and being accordingly dimensioned at least mechanically and geometrically, to transport a gripped container horizontally to different positions in the system 1.

Such a system comprises rails 4, for guiding the container handling vehicles 301 and the elevators 20 as it moves between locations above the rectangular spaces of the pattern. When in position, the vehicle 301 can grip and lift a container and also lower and to drop a container 6 into such a space of the pattern.

As seen in Fig. 6a, straight rail sections 4 are formed along the above mentioned rim sections of the containers and the rail system is formed by the rail sections along the rim sections 28, 30 of containers 6 forming the topmost layer of containers of the arrangement when arranged next to each other and on top of each other (Fig. 5).

As seen in Figs. 6a and 6b, containers 6 comprise form fitting side elements 12, 14 such as dovetails by which the containers can be held immobile next to each other (or relative to each other) in the horizontal X- and Y-direction, while allowing vertical relative motion in any of the levels of the containers 6 when stacked and arranged in these stacks next to each other in the X- and Y-direction. This provides for an arrangement of the containers 6 in stacks which is thus vertically stable, in particular when a vehicle 301, 20 drives on top of the arrangement and thus causes dynamic forces which may be directed laterally.

The arrangement of the rail sections of the containers will now be described with reference to Figs. 6a to 7b.

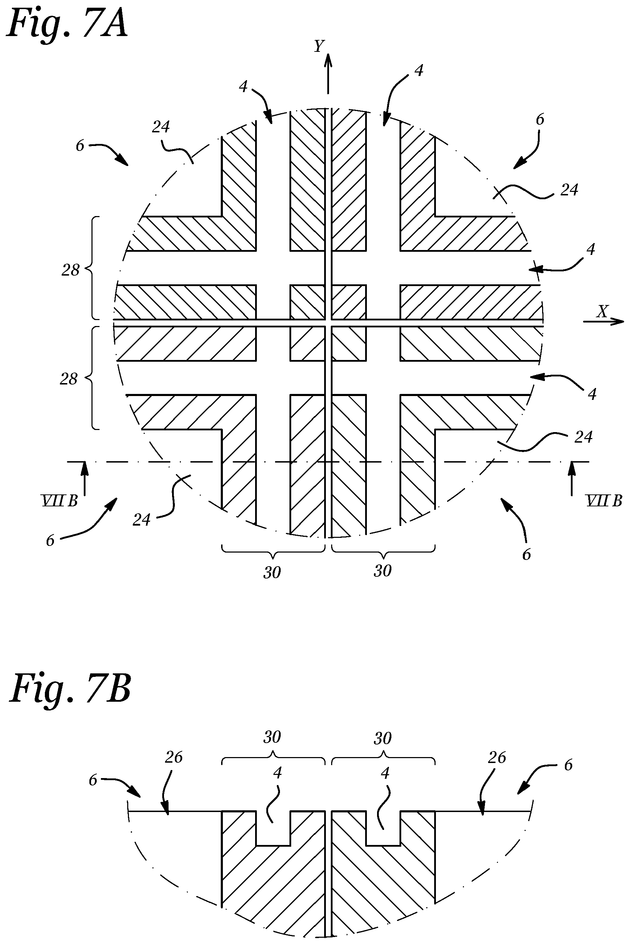

When containers 6 are arranged next to each other to form the rectangular pattern in one mutual layer (and in particular in the uppermost layer of such arrangement of the containers), then rail sections 4 of adjacent or neighbouring containers 6 extending/oriented in the X-direction are aligned with each other. In addition, the rail sections 4 extending/oriented in the Y-direction of neighbouring or adjacent containers 6 are also aligned with each other. As such, in a respective mutual layer, the rail sections 4 of neighbouring containers 6 form continuous rails 4. Consequently, as each container 6 comprises rails 4 in its four rim sections 28, 30 of its opening 24, two parallel rails 4 are formed directly next to each other as seen in Figs. 7a and 7b. This means that, vehicles 301, 20 may pass each other on neighbouring rows of containers 6 with each vehicle running on one of the parallel sets of rails 4.

To build an arrangement of possibly more than one stacked layers 16, 22 of containers on a plane ground 18 and therefore moving a container up to form a respective next uppermost layer, the container handling vehicles 301 are configured to raise containers 6 by at least the height of a container 6 above the rail 4 or ground 18 on which the vehicle 301 is positioned (to form a next higher uppermost layer).

Further, to build an arrangement of possibly more than one stacked layers of containers, in particular from a plane ground 18, and therefor moving a vehicle up onto the respective uppermost layer, the system can comprise a vehicle handling vehicle 20 configured to be operated on the rail system 4 and/or on a horizontal ground 18, to raise, by means of the lifting device 401c of the vehicle, other vehicles 20, 301 by at least the height of a container and to lower such vehicles 20, 301 onto the rail system 4 and to transport such vehicles on the rail system 4 and/or on a horizontal ground 18 (to raise a vehicle onto a (newly formed) next higher topmost layer 20).

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

### List of reference numbers

- 1: Automated storage and retrieval system
- 4: rails
- 6: containers
- 8: upper rim
- 10: stacks
- 12, 14: dovetail elements
- 16: first layer of containers 6
- 18: ground
- 20: elevator
- 22: next upper level
- 24: storage volume
- 26: upper opening
- 28, 30: four rim sections
- X and Y: two perpendicular directions
- 100: Framework structure
- 102: Upright members of framework structure
- 104: Storage grid
- 105: Storage column
- 106: Storage container
- 106': Particular position of storage container
- 107: Stack
- 108: Rail system
- 110: Parallel rails in first direction (X)
- 112: Access opening
- 119: First port column
- 120: Second port column
- 201: Prior art container handling vehicle
- 201a: Vehicle body of the container handling vehicle 201
- 201b: Drive means / wheel arrangement / first set of wheels in first direction (X)
- 201c: Drive means / wheel arrangement / second set of wheels in second direction (*Y*)
- 301: Prior art cantilever container handling vehicle
- 301a: Vehicle body of the container handling vehicle 301
- 301b: Drive means / first set of wheels in first direction (X)
- 301c: Drive means / second set of wheels in second direction (*Y*)
- 304: Gripping device
- 401: Prior art container handling vehicle
- 401a: Vehicle body of the container handling vehicle 401
- 401b: Drive means / first set of wheels in first direction (X)
- 401c: Drive means / second set of wheels in second direction (*Y*)
- 404: Gripping device
- 404a: Lifting band
- 404b: Gripper
- 404c: Guide pin
- 404d: Lifting frame
- 500: Control system
- X: First direction
- Y: Second direction
- Z: Third direction

## Claims

1. An automated storage and retrieval system comprising:
- at least one container handling vehicle (301);
- a plurality of storage containers (6) stackable one on top of another to form self-supporting stacks (10), which stacks (10) are arrangeable next to each other in rows in a first horizontal direction X and in a second horizontal direction Y perpendicular to the first horizontal direction X, each container (6) having an upper rectangular opening defined by an upper rim comprising four rim sections;
- a rail system comprising straight rail sections formed by the rim sections of the containers (6) forming the topmost layer of containers (6) of the stacks (10) when arranged next to each other;
- the at least one container handling vehicle (301) being configured to be operated on the rail system to raise, by means of a lifting device of the vehicle, storage containers from, and to lower storage containers (6) onto, the stacks (10), and to transport the storage containers (6) above the stacks (10), wherein the rail system (108) comprises a first set of parallel rails (4) arranged to guide movement of the at least one container handling vehicle (301) in a first horizontal direction X, and a second set of parallel rails arranged perpendicularly to the first set of rails (4) to guide movement of the at least one container handling vehicle (301) in a second horizontal direction Y which is perpendicular to the first direction X, wherein the at least one container handling vehicle (301) is arranged to move above the stacks (10) in both directions.

2. A system according to claim 1, wherein the containers comprise form fitting side elements configured to hold containers next to each other in the X- and Y-direction, while allowing vertical relative motion when the stacks (10) are neighboured next to each other in rows in a first horizontal direction X and/or in a second horizontal direction Y perpendicular to the first horizontal direction X.

3. A system according to one of the preceding claims, wherein the rail sections of the containers (6) neighbouring each other are aligned in the X-direction and in the Y-direction with each other when the stacks (10) are arranged next to each other in the rows, and such that the rail sections of the neighbouring containers (6) of the topmost layer form continuous rails to the extent the stacks (10) are of the same height and arranged next to each other in the respective direction.

4. A system according to claim 3, wherein pairs of parallel rails are formed by rail sections of adjacent containers (6).

5. A system according to one of the preceding claims, wherein the at least one container handling vehicle is configured to raise containers (6) by at least the height of a container (6) above the rail or ground on which the vehicle is positioned.

6. A system according to one of the preceding claims, comprising at least one vehicle handling vehicle configured to be operated, on the rail system (108) and/or on a horizontal ground, to raise, by means of a lifting device of the vehicle, vehicles (201) by at least the height of a container (106) and to lower such vehicles (201) onto the rail system and to transport such vehicles (201) on the rail system and/or on a horizontal ground.

7. A system according to claim 6, wherein the at least one vehicle handling vehicle (301) is also configured as a container handling vehicle as claimed in claim 5.

8. A storage container (6) for an automated storage and retrieval system according to any one of the preceding claims, wherein the storage container comprises an upper rectangular opening defined by an upper rim comprising four rim sections each forming straight rail sections.

9. A storage container (6) according to claim 8, comprising form fitting side elements configured to hold containers next to each other in the X- and Y-direction while allowing vertical relative motion between adjacent containers.

10. A storage container (6) according to claim 9, wherein the form fitting side elements are formed as dovetails.

11. A storage container (6) according to any of claims 8 to 10, wherein corresponding form fitting structures are provided in the upper rim sections (28, 30) and in the bottom of the container.

12. A handling vehicle for an automated storage and retrieval system according to any of claims 1 to 7, configured to be operated, on a rail system (108) and/or on a horizontal ground, to raise, by means of a lifting device of the vehicle, vehicles (201) by at least the height of a container (106) and to lower such vehicles (201) onto the rail system and to transport such vehicles (201) on the rail system and/or on a horizontal ground

13. A method for storing and retrieving items in containers of an automated storage and retrieval system according to any of claims 1 to 7, the method comprising forming a grid of said containers to form said rail system comprising straight rail sections formed by the rim sections of the containers (6) forming the topmost layer of containers (6) of the stacks (10) when arranged next to each other.

14. A method according to claim 13, the method comprising:
- a) raising the topmost container of a first stack and transporting it to an end of a row of stacks and lowering it there next to the row by means of a container handling vehicle (301),
- b) repeating step a), until, in the first stack, a container is raised which needs to be handled at an access station,
- c) transporting said container to the access station.

15. A method according to claim 14, wherein method further comprises:
- d) raising the respective topmost of the containers lowered next to the row, or of another stack at an end of an end row, and transporting it to the first stack and lowering it there, and
- e) repeating step d), until the first stack is filled up to the height of the neighbouring stacks.
